# EUROPÄISCHE PATENTANMELDUNG

(11) **EP 1 727 342 A1**
(43) Veröffentlichungstag der Anmeldung: **29.11.2006**
(21) Anmeldenummer: 06009934.8
(22) Anmeldetag: 15.05.2006
(51) Int. Cl.: H04M 3/533

(54) **Betreffzeile für Sprachnachrichten**

(30) Priorität: 27.05.2005 DE 102005024353
(71) Anmelder: Deutsche Telekom AG, 53113 Bonn (DE)
(72) Erfinder: Brackmann, Ludwig, Dipl.-Ing., 53225 Bonn (DE); Welke, Sebastian, 12623 Berlin (DE); Vogt, Katja, Dipl.-Kffr., 13053 Berlin (DE); van Esch, Peter Meier, Dipl.-Wirt.-Ing., 50698 Köln (DE)

(57) **Zusammenfassung**

Verfahren zur Hinterlegung einer Sprachnachricht in einer Mailbox, wobei der Sprachnachricht eine Begleitinformation zugeordnet wird, die in Verbindung mit der Sprachnachricht als Betreffdatensatz in einer Betreffdatei gespeichert wird, wobei der Inhalt der Begleitinformation in Zusammenhang mit dem Inhalt der Sprachnachricht steht.
Wobei die Begleitinformation als SMS oder als Sprachnachricht ausgegeben werden kann. Die Begleitinformation kann von Anrufer selbst oder automatisch durch Auswertung des Gesprächsinhalts erstellt werden.

## Beschreibung

Die Erfindung betrifft ein Verfahren zum Betrieb eines Telefonnetzes, wobei ein Anrufer zur Herstellung eines Anrufes die Netzkennung des dem Angerufenen zugeordneten Zielanschlusses über sein Endgerät vorgibt, wobei zwischen dem Anschluss des Anrufers und dem Zielanschluss des Angerufenen eine Sprachverbindung aufgebaut wird, wobei dem Zielanschluss eine Mailbox zur Hinterlegung einer Sprachnachricht durch den Anrufer zugeordnet wird. Die Erfindung betrifft zudem ein System zur Umsetzung des Verfahrens.

Solche Sprach-Mailboxen, in denen Anrufer Nachrichten hinterlassen können, sind seit langem bekannt. Der Angerufene kann den Inhalt seiner Mailbox zu einem späteren Zeitpunkt abrufen, wobei ihm beim Abruf in einer Ansage die Rufnummer oder der Namen desjenigen mitgeteilt wird, der versucht hat, ihn zu erreichen. So meldet sich die Mailbox beispielsweise mit den Worten "Heute, 20.15 Uhr, ein Anruf von Telefonnummer 0123-456789". Diese Information wurde aus den Daten des Anrufes respektive des Anschlusses des Anrufers gewonnen. Der Anrufer hätte auch die Möglichkeit gehabt, eine Nachricht zu hinterlassen, die dem Angerufenen dann dargeboten wird. Es ist somit bekannt, den an eine Mailbox gerichteten Anruf mit "Begleitinformation" zu verbinden, die in Form automatisch generierter Information, wie Rufnummer oder Namen vorliegen und/oder die in Form einer Sprachnachricht vom Anrufer erstellten sind.

Auch im Falle normaler Anrufe ist die Verknüpfung mit Begleitinformation bekannt. Beispielsweise kann bei der Verbindung dem Angerufenen die Rufnummer oder der Name des Anrufers dargeboten werden. So kann der Angerufene schon im Vorfeld sehen, wer ihn gerade zu sprechen wünscht. Gegebenenfalls kann er das

Gespräch verweigern.

Unter anderem aus der DE 101 00 621 A1 ist es zudem bekannt, zusammen mit der Rufnummer eine dem Inhalt des Anrufs zugeordnete Information an den Angerufenen zu übertragen, die diesem vor der Entgegennahme des Anrufes angezeigt wird. So kann er sich innerlich auf das Thema des anstehenden Gespräches vorbereiten. Diese Zusatzinformation kann als Stichwort oder Begleittext ausgebildet sein und manuell oder durch Sprachvorgabe generiert werden. Die Zusatzinformation kann auch eingegeben werden, während das Endgerät des Angerufenen klingelt oder besetzt ist. Dabei wird allerdings nur ein Anruferlisteneintrag erzeugt.

Von "E-Mails" ist zudem bekannt, diese mit einer Begleitinformation in Form einer Betreffzeile zu versehen. Da sich "Mail-Clients" seit Jahren gerade in Verbindung mit portablen Organizern oder Mobiltelefonen wachsender Beliebtheit erfreuen, ist es für den Empfänger besonders wichtig, die Relevanz eingegangener E-Mails anhand der Betreffzeile erkennen und eine "manuelle" oder automatische Filterung vornehmen zu können. Schließlich ist es wegen der mitunter geringen Bandbreite und der hohen Verbindungskosten der Funkverbindung ärgerlich, unnötige "Spam"-Mails, die anhand des Absenders oder der Betreffinformation nicht als solche erkannt werden, mit ihrem gesamten Inhalt vom Mail-Server herunter zu laden. Eine nutzerorientierte automatische Vorfilterung kann insbesondere anhand signifikanter Wortfolgen innerhalb der Betreffzeile erfolgen.

Im Zusammenhang mit diesen Diensten sind Filterfunktionen bekannt, die E-Mails nach eigenen Regeln umleiten und direkt sortieren. Eingegangene E-Mails können später anhand unterschiedlicher Nachrichtenmerkmale sortiert und gruppiert werden, wobei die Größe, der Absender und/oder das Eingangsdatum der Post als Kriterien dienen können. Durch Vergleich der Betreffzeilen können Nachrichten auch thematisch zusammengefasst werden.

Die Aufgabe der Erfindung ist es nunmehr, ein Verfahren zu schaffen, das sich mit einfachen Mitteln kostengünstig umsetzen lässt und das eine Möglichkeit zur effektiven "manuellen" und/oder automatischen Filterung eingegangener Sprachnachrichten erlaubt. Zudem ist es Aufgabe der Erfindung, ein System zur Umsetzung des Verfahrens zu schaffen.

Diese Aufgaben werden durch das Verfahren nach Anspruch 1 und das System nach Anspruch 8 gelöst. Die Unteransprüche nennen besonders vorteilhafte Ausgestaltungen der Erfindung.

Der Grundgedanke der Erfindung liegt darin, Sprachnachrichten, die auf einer Mailbox hinterlassen werden, mit einer Betreffdatei, die einen Betreffdatensatz aufweist, zu versehen, wobei der Betreffdatensatz Begleitinformation enthält. Diese Begleitinformation steht wiederum in Zusammenhang mit dem Inhalt und/oder der Bedeutung der Sprachnachricht. Anhand der Begleitinformation kann der Angerufene im Vorhinein den Wert der Sprachnachricht abschätzen. Über die Begleitinformation erhält er auch eine Entscheidungshilfe, inwieweit es sich für ihn "lohnt", diese Nachricht abzufragen und/oder welchen Stellenwert dieser Nachricht in der Liste aller gespeicherten Nachrichten zuzuordnen ist. Die Begleitinformation wird erfindungsgemäß der Sprachnachricht zugeordnet und in Verbindung mit der Sprachnachricht als Betreffdatensatz in einer Betreffdatei gespeichert. Im Idealfall enthält der Betreffdatensatz eine aussagekräftige Zusammenfassung des Inhalts der Sprachnachricht.

Der große Vorteil der Erfindung liegt darin, dass der Anrufer nun die Möglichkeit hat, Sprachnachrichten vor der Abfrage zu selektieren und gegebenenfalls zu verwerfen, ohne sie vernommen zu haben. Dadurch kann er unnötige Kosten vermeiden, die er für die Abfrage dieser "Spam"-Nachrichten aufbringen würde. Zudem lässt sich die Erfindung auch für die automatische Filterung von "Spam"-Nachrichten auf der Mailbox einsetzen

Erfindungsgemäß wird einem Anruf, der über ein Telefonnetz geführt wird und der in einer Mailbox landet, eine Betreffdatei zugeordnet, die einen in standardisiertem Format befindlichen Text, beispielsweise in ASCII-Format, enthält. Der Inhalt der Betreffdatei respektive des Betreffdatensatzes, also die Begleitinformation, wird vom Anrufer selber vorgegeben, in dem er diese bewusst (aktiv) oder unbewusst (passiv) generiert. Die Begleitinformation kann dem Angerufenen unmittelbar vor der Abfrage der Mailbox insbesondere als Textmeldung im Display oder als Betreffzeile in einem einsehbaren Sammelordner dargeboten werden.

Ein wesentlicher Aspekt der Erfindung ist, dass damit die genannten Möglichkeiten bezüglich der Auswertung, der Gruppierung und der nachträglichen Identifizierung nicht nur im Zusammenhang mit E-Mails sondern auch im Zusammenhang mit hinterlassenen Sprachnachrichten bestehen. Durch die erfindungsgemäße Betreffzeile als Anhang an Sprachnachrichten kann auch, ähnlich wie bei den bekannten "intelligenten" Mailsystemen, eine spätere Suche und Filterung erfolgen.

Bezüglich der Kodierung der Begleitinformation stehen verschiedene vorteilhafte Ausführungsformen zur Verfügung: So ist es möglich, die Begleitinformation in einer Eingabefunktion aktiv zu kodieren. Zum anderen kann die Begleitinformation aus einer schon auf eine Mailbox gesprochen Nachricht "herausdestilliert" und im Zusammenhang mit der Sprachnachricht gespeichert werden. Nachfolgend die Ausführungsformen im Einzelnen:

Vorteilhafterweise kodiert der Anrufer die Begleitinformation mittels einer ihm zur Verfügung gestellten Eingabefunktion, bevor die Begleitinformation als Datensatz in der Betreffdatei gespeichert wird. Dabei sei darauf hingewiesen, dass in diesem Zusammenhang das Merkmal "Kodierung" verallgemeinert "Eingabe" bedeutet.

Eine solche Eingabefunktion, die den Anrufer zur Eingabe der Begleitinformation auffordert oder die die Begleitinformation aus der Sprachnachricht und/oder dem Verhalten des Anrufers selber generiert, kann vom Diensteanbieter bereitgestellt werden.

Dabei kann der Anrufer die Begleitinformation als Spracheingabe über ein Mikrophon seines Endgerätes kodieren, wobei die Spracheingabe durch ein Programm zur Transformation in den standardisierten Text übersetzt wird bevor dieser zum Inhalt der Betreffdatei gemacht wird. Dazu spricht der Anrufer vor oder nach dem Aufsprechen der Sprachnachricht zunächst die eine Betreffzeile in Form einer kurzen Wortfolge. Diese wird durch Spracherkennung in einen Datensatz umgewandelt, der eine Betreffzeile enthaltend standardisierten Text darstellt, wobei der Datensatz in der Betreffdatei gespeichert wird. Dabei kann es vorteilhaft sein, wenn der Text vor der Darbietung in einer Rücktransformation rückübersetzt und dem Angerufenen über einen, insbesondere seinem Endgerät zugeordneten, Lautsprecher dargeboten wird.

Wie dargelegt, ist es auch möglich, eine Betreffzeile automatisch aus dem Inhalt einer hinterlassenen Nachricht, die von einem Anrufer auf die Mailbox des Angerufenen gesprochen wurde, heraus zu destillieren. Die Betreffzeile beinhaltet dann eine inhaltliche Zusammenfassung der Sprachnachricht. Somit werden auf die Mailbox gesprochene Nachrichten, ähnlich einer Telefonnotiz, nachträglich mit einer Betreffzeile versehen. Dazu kann die Sprachnachricht zunächst mit einem Programm in eine Textdatei Konvertiert werden, bevor die Textdatei einer "Keyword"-Analyse unterzogen wird.

Ganz gleich, ob das Kodieren in einer aktiven Eingabe des Anrufers und/oder in einer von der Eingabefunktion automatisch analysierten Sprachnachricht oder Verhaltensweise des Anrufers liegt , so geht die Begleitinformation auf jeden Fall auf die Person des Anrufers zurück und wird nicht aus systemimmanenten Daten des Anrufes entnommen. Sicherlich hat die automatische Analyse einer Sprachnachricht den Vorteil, dass Begleitinformation und Sprachnachricht in Sinnzusammenhang stehen und der Anrufer keine Möglichkeit hat, den Angerufenen durch eine falsche Begleitinformation über den Inhalt der von ihm hinterlassenen Sprachnachricht zu täuschen.

Unabhängig davon, ob die Erstellung per Sprache oder per Tastatur erfolgt, ist es vorteilhaft, wenn die vom Anrufer vorgegebene Begleitinformation von einem Filterprogramm auf das Vorhandensein von Schlagworten untersucht wird und statt der mitunter für diesen Zweck zu langen Wortfolge nur die herausgefilterten Schlagworte als Text in der Betreffdatei gespeichert werden. Durch eine gezielte Keyword-Analyse des Nachrichteninhaltes kann eine Komprimierung sowie eine inhaltliche Auswertung und Zuordnung der Begleitinformation vorgenommen werden. Schließlich sollte der in der Betreffdatei gespeicherte Text eine Länge von insbesondere weniger als 160 Zeichen aufweisen, was dem Umfang einer SMS entspricht. Die als derartiger Standardtext vorliegende Begleitinformation in Form einer Betreffzeile kann dem Angerufenen über ein Display dargeboten werden, das seinem Endgerät zugeordnet ist.

Durch eine klare Differenzierung unterschiedlicher Keywords kann der Angerufene eingegangene Nachrichten unterschiedlichen Themen zuordnen. Der Nutzer kann dabei durch die Eingabe einer Keyword-Liste entsprechende Kategorien für die Einordnung der Sprachnachrichten vorgeben.

Ganz generell können durch den Einsatz von Sprachbewertungstechnologien auch weitere Gesprächseigenschaften in Form von Gesprächsattributen erkannt werden. Insbesondere lassen sich persönliche Merkmale des Anrufers, wie der Wahrheitsgehalt der Nachricht, die Stimmung oder die Dringlichkeit, aus der Sprache "herauslesen" und als Begleitinformation in die Betreffdatei aufnehmen. Durch Auswertung der Sprechgeschwindigkeit, der Lautstärke, der Betonung und anderer Charakteristika können Rückschlüsse auf die inhaltliche Bedeutung des gesprochenen Wortes gezogen werden. Mit derartigen Technologien kann eine Analysefunktion realisiert werden, die schon im Vorfeld eines Anrufes eine "Meta-Information" generiert, die der Begleitinformation zugeordnet wird. Eine solche Analysefunktion analysiert Gefühlsregungen des Anrufers insbesondere während der Anwahl und speichert die Ergebnisse als Text in der Betreffdatei ab. Durch die Charakterisierung der in einer Mailbox hinterlassenen Sprachnachrichten kann der Angerufene entscheiden, in welcher Reihenfolge er die Sprachnachrichten abhören möchte. So kann er zunächst die angenehmen Anrufe und später die aufgeregten abhören.

Darüber hinaus kann jeder Betreffzeile das Datum und die Uhrzeit des Anrufes zugeordnet werden, das direkt aus dem aktuellen Kalender entnommen ist. So ist es möglich, den Sprachnachrichten einen Vorgang eindeutig zuzuordnen. Durch den Einsatz von Filterregeln können Sprachnachrichten unabhängig der rufenden Rufnummer anhand der Betreffzeile auch zu entsprechenden Eingangsordnern oder Medien weitergeleitet oder entgegengenommen werden.

Wie im Falle von E-Mails bekannt, ist das System in der Lage, durch weitere Zusätze innerhalb der Betreffzeile, wie beispielsweise "AW:", bereits im Rahmen der Betreffzeile auf eine frühere Sprachnachricht Bezug zu nehmen. Durch die Auflistung früherer Sprachnachrichten verbunden mit den entsprechenden Betreffzeilen kann dann der Nutzer direkt einer dieser Betreffzeilen, welche dann gesondert gekennzeichnet werden, für ein neu zu führendes Gespräch zum gleichen Thema verwenden.

Das Verfahren kann durch einen insbesondere zentral aufgestellten und über das zum Austausch von Gesprächen (Anrufen) geeignete Telekommunikationsnetz Computer realisiert werden, wobei an das Telekommunikationsnetz eine Vielzahl von Endgeräten verbunden sind. Dabei sind zumindest einigen Anschlüssen Mailboxen zur Aufzeichnung von Sprachnachrichten zugeordnet. Auf dem Computer ist ein Dienst realisiert, der einer auf eine Mailboxen aufgesprochenen Sprachnachricht Begleitinformation zuordnet, wobei die Begleitinformation durch den Anrufer gewissermaßen selber vorgegeben wird. Die Begleitinformation wird als standardisierter Text in einer dem Anruf zuordneten Betreffdatei gespeichert, wobei die Betreffdatei am Zielanschluss zur Verfügung steht und wobei die in der Betreffdatei enthaltene Begleitinformation dem Angerufenen vor der Auslese der Sprachnachricht dargeboten wird. Die Betreffdaten sind in einer für den Computer zugänglichen Datenbank gespeichert, wobei ein Betreffdatensatz der entsprechenden Sprachnachricht über einen Verweis zugeordnet ist. Zudem ist eine "Push"-Funktion vorhanden, die den Inhalt des Betreffdatensatzes zum Telefon des Angerufenen zur dortigen Ausgabe sendet.

## Patentansprüche

1. Verfahren zum Betrieb eines Telefonnetzes, wobei ein Anrufer zur Herstellung eines Anrufes die Netzkennung des dem Angerufenen zugeordneten Zielanschlusses über sein Endgerät vorgibt, wobei zwischen dem Anschluss des Anrufers und dem Zielanschluss des Angerufenen eine Sprachverbindung aufgebaut wird, wobei dem Zielanschluss eine Mailbox zur Hinterlegung einer Sprachnachricht durch den Anrufer zugeordnet ist,
**dadurch gekennzeichnet,**
**dass** der Sprachnachricht eine Begleitinformation zugeordnet wird, die in Verbindung mit der Sprachnachricht als Betreffdatensatz in einer Betreffdatei gespeichert wird, wobei der Inhalt der Begleitinformation in Zusammenhang mit dem Inhalt der Sprachnachricht steht.

2. Verfahren nach Anspruch 1,
**dadurch gekennzeichnet,**
**dass** die Begleitinformation im Format einer standardisierten Textdatei umfassend wenige Worte und/oder Ziffern in dem Betreffdatensatz gespeichert wird, wobei ein Betreffdatensatz insbesondere eine Länge von weniger als 160 Zeichen hat.

3. Verfahren nach Anspruch 1 oder 2,
**dadurch gekennzeichnet,**
**dass** die Begleitinformation vom Anrufer mittels einer Eingabefunktion, insbesondere mittels Spracheingabe oder mittels Tastatureingabe, erstellt wird.

4. Verfahren nach Anspruch 1 oder 2,
**dadurch gekennzeichnet,**
**dass** die Begleitinformation automatisch mit einem Transformations- und Auswerteprogramm aus dem Inhalt der Sprachnachricht erstellt wird, wobei eine Auswertung des Gesprächsinhalts insbesondere über eine Keyword-Analyse vorgenommen wird.

5. Verfahren nach Anspruch 4,
**dadurch gekennzeichnet,**
**dass** das Transformations- und Auswerteprogramm eine Analyse der Gefühlslage des Anrufers vornimmt und daraus eine Dringlichkeit ermittelt, wobei der Grad der Dringlichkeit in einem dem Betreffdatensatz zugeordneten Datum gespeichert wird.

6. Verfahren nach einem der vorherigen Ansprüche,
**dadurch gekennzeichnet,**
**dass** die Begleitinformation dem Angerufenen vor der Abfrage der Sprachnachricht, insbesondere auf dem Display seines mobilen Telefons, dargeboten wird.

7. Verfahren nach einem der vorherigen Ansprüche,
**dadurch gekennzeichnet,**
**dass** der standardisierte Text vor der Darbietung durch ein Programm zur Rücktransformation rückübersetzt und dem Angerufenen über einen, insbesondere seinem mobilen Telefon zugeordneten, Lautsprecher dargeboten wird.

8. System zur Umsetzung des Verfahrens nach einem der vorherigen Ansprüche aufweisend ein Telefonnetz, das eine Vielzahl von Anschlüssen, die insbesondere mobilen Telefonen zugeordnet sind, verbindet, wobei über das Telefonnetz ein Computer zugänglich ist, auf dem einigen Anschlüssen zugeordnete Mailboxen zur Aufzeichnung von Sprachnachrichten realisiert sind,
**gekennzeichnet durch**
eine für den Computer zugängliche Datenbank zur Speicherung von Betreffdaten, wobei ein Betreffdatensatz einer Sprachnachricht über einen Verweis zugeordnet ist, wobei eine "Push"-Funktion vorhanden ist, die den Inhalt des Betreffdatensatzes zum Telefon des Angerufenen zur dortigen Ausgabe sendet.
